Europäisches Patentamt

European Patent Office

Office européen des brevets

(11) Veröffentlichungsnummer: **0 226 704**

**A1**

(12) **EUROPÄISCHE PATENTANMELDUNG**

(21) Anmeldenummer: **86111333.0**

(22) Anmeldetag: **16.08.86**

(51) Int. Cl.⁴: **H 02 H 3/33**
**H 02 H 3/20**

(30) Priorität: **30.08.85 DE 3531023**

(43) Veröffentlichungstag der Anmeldung:
**01.07.87 Patentblatt 87/27**

(84) Benannte Vertragsstaaten:
**CH DE FR GB IT LI NL SE**

(71) Anmelder: **BROWN, BOVERI & CIE Aktiengesellschaft**
**Kallstadter Strasse 1**
**D-6800 Mannheim 31(DE)**

(72) Erfinder: **Wilbertz, Heribert, Dipl.-Ing.**
**Breslauer Strasse 17**
**D-6930 Eberbach(DE)**

(74) Vertreter: **Kempe, Wolfgang, Dr. et al,**
**c/o BROWN, BOVERI & CIE AG ZPT Postfach 351**
**D-6800 Mannheim 31(DE)**

(54) **Schaltungsanordnung zur Erfassung eines Fehler- bzw. Differenzstromes.**

(57) Eine Schaltungsanordnung zur Erfassung eines Differenz- bzw. Fehlerstromes umfaßt einen Summenstromwandler (10, 11), dessen Sekundärwicklung (12, 13) bei Auftreten eines Fehlerstromes ein Differenzstromsignal abgibt, das in einer netzversorgten elektronischen Einrichtung (14) verarbeitet und verstärkt wird. Das von diesem Differenzstromsignal abhängige Ausgangssignal schaltet ein steuerbares Halbleiterventil (54) durch, das einen Auslöser zum Betätigen von das Netz abschaltenden Schaltkontakten ansteuert. Parallel zur Steuerelektrode (52) und der Anode des steuerbaren Halbleiterventils (54) ist ein Schwellwertschalter (113) und ein erster Teilwiderstand (111) eines Spannungsteilers (110) geschaltet, wobei der andere Teilwiderstand (112) des Spannungsteilers (110) an Erde angeschlossen ist. Damit wird eine Sicherung gegen falsches anschließen erzielt.

EP 0 226 704 A1

./...

Fig. 8

BROWN, BOVERI & CIE Aktiengesellschaft

Mannheim                                    28. Aug. 1985

Mp.-Nr. 603/85                              ZPT/P4 - Ft/Sd

## Schaltungsanordnung zur Erfassung eines Fehler- bzw. Differenzstromes

Die Erfindung betrifft eine Schaltungsanordnung gemäß dem Oberbegriff des Anspruches 1.

Eine derartige Schaltungsanordnung ist im wesentlichen aus der EP-OS 00 54 958 bekanntgeworden.

Diese Schaltungsanordnung wird in Differenzstromschutzeinrichtungen benutzt, die in Niederspannungsinstallationen mit Netzspannungen von z.B. 220 Volt eingebaut werden sollen. Die für die in diesen Schutzeinrichtungen angewendete elektronische Schaltung gemäß der EP-OS 0054 958 erforderliche Versorgungsspannung ist auf diese Netzspannung von z.B. 220 Volt ( 10%) abgestimmt. Selbstverständlich können derartige Einrichtungen auch bei 230/400V bzw. 240/415V eingesetzt werden.

Zu dem Begriff "Differenzstromschutzeinrichtung" sei erläuternd folgendes ausgeführt:

Im Rahmen des VDE-Vorschriftenwesens wurde lange Zeit darüber diskutiert, ob ein Fehlerstrom-Schutzschalter, der von der Netzspannung versorgt wird, zulässig ist oder nicht. Im Ergebnis ergab sich dabei der Kompromiß, daß der Begriff "Fehlerstrom-Schutzschalter" den netzspannungsunabhängigen Schutzeinrichtungen gemäß DIN VDE 0664 vorbehalten bleibt, und daß Schutzeinrichtungen mit Schaltungen nach der EP-OS 00 54 958 al "Differenzstrom-Schutzeinrichtungen" ("Di-Schalter") bezeichnet werden.

Bei der Errichtung von Niederspannungsinstallationen kommt es immer wieder vor, daß Leitungen vertauscht werden, und zwar im wesentlichen aufgrund von Versehen des die Anlage installierenden Monteurs. Dadurch besteht die Möglichkeit, daß netzspannungsversorgte Differenzstrom-Schutzeinrichtungen wie z.B. der Schalter mit der oben genannten Schaltungsanordnung und damit auch die daran angeschlossenen Verbraucher (Betriebsmittel) an 380 Volt angeschlossen werden. Dies führt zur Zerstörung der elektronischen Schaltung in demjenigen Schalter, der die Schaltungsanordnung gemäß der o.g. europ. Patentanmeldung enthält.

Aufgabe der Erfindung ist es daher, die Schaltungsanordnung der eingangs genannten Art soweit zu verbessern, daß auch höhere Versorgungsspannungen (z.B. 380 Volt) nicht mehr zur Zerstörung der Schaltungsanordnung führen.

Diese Aufgabe wird bei einer ersten Ausgestaltung der Erfindung gelöst durch die kennzeichnenden Merkmale des Anspruches 1.

Mit dieser Ausführung wird die an der Schaltungsanordnung bzw. an dem Schalter, in dem die Schaltungsanordnung eingebaut ist, anliegende Netzspannung überwacht und sie bewirkt bei Überschreiten eines vorgegebenen Grenzwertes die Trennung der elektronischen Schaltung des Schalters und auch der an diesem Schalter angeschlossenen Betriebsmittel von der zu hohen Netzspannung. Die Abschaltung erfolgt dabei über den gleichen Kontaktapparat, der auch die Trennung eines differenzstrombehafteten Stromkreises bewirkt.

An sich ist der Begriff des "Überspannungsauslösers" durchaus bekannt. Erfindungsgemäß wird aber die Auswertung des Abschaltbefehles bei Überspannung durch die gleichen Elemente übernommen, die auch die Abschaltung bei einem auftretenden Differenzstrom bewirken, wobei die Detektion der Überspannung durch den Spannungsteiler mit dem nachgeschalteten Schwellwertschalter erfolgt. Zur Unterdrückung von unerwünschten Abschaltungen bei kurzzeitigen Spannungsüberhöhungen kann zwischen dem Spannungsteiler und dem Schwellwertschalter noch ein Verzögerungsglied, vorzugsweise ein Integrationskondensator, geschaltet werden.

Eine weitere Ausgestaltung der Erfindung ist durch die kennzeichnenden Merkmale des Anspruches 3 bestimmt.

Der für die Netzspannung von z.B. 220 Volt dimensionierte Metalloxidvaristor wird vergleichsweise bei 380V noch nicht niederohmisch genug, so daß ein für das Auslöserelais ausreichende Arbeitsstrom zum Fließen kommt. Der gasgefüllte Überspannungsableiter wird aber beim Ansprechen so niederohmisch, daß der Strom im Auslöserelais eine ausreichende Höhe annehmen kann. Das Relais

0226704

übernimmt dabei die Funktion eines Strombegrenzungswiderstandes, der immer erforderlich ist, wenn ein gasgefüllter Überspannungsableiter direkt parallel an ein niederohmiges Netz angeschlossen ist.

Die erfindungsgemäßen Schaltungsanordnungen können bei allen netzspannungsversorgten Differenzstrom-Schutzeinrichtungen gemäß obiger Definition eingesetzt werden, die mit einem über einen Thyristor oder ähnlichen Halbleiterventil geschalteten Arbeitstromauslöser arbeiten. Die Ausführung der Einrichtung zur Erfassung und Verarbeitung des an der Sekundärwicklung anstehenden Signals (bei den netzunabhängigen Schutzschaltern als Fehlerstromsignal bezeichnet) ist ohne Bedeutung für die Erfindung.

Anhand der Zeichnung, in der ein Ausführungsbeispiel der Erfindung dargestellt ist, soll die Erfindung näher erläutert und beschrieben werden.

Zu diesem Zweck wird im wesentlichen auf die EP-OS 00 54 958 verwiesen, in der die Schaltungsanordnung beschrieben ist, die durch die erfindungsgemäßen zusätzlichen Bauelemente verbessert wird. Lediglich der Formhalber wird im folgenden der Inhalt der EP-OS 00 54 958, Seite 6 bis Seite 20, wörtlich wiederholt. Dabei wäre der Begriff "Fehlerstrom" durch Differenzstrom" zu ersetzen, um in der eingangs dargestellten Terminologie zu bleiben. Da aber beide Begriffe an sich das gleiche Phänomen beschreiben, soll dabei davon abgesehen werden, um die Identität zur EP-OS 00 54 958 bezüglich der dortigen Figurenbeschreibung herauszustellen. Gegenüber der EP-OS 00 54 958 sind lediglich geändert die Figur 8 und hinzugefügt die Figur 9.

Mp.-Nr. 603/85                    5                    28. Aug. 1985

Es zeigt:

Figur 1      ein Blockschaltbild einer bekannten Fehlerstromschutzschalteranordnung mit einem integrierten Schaltkreis,
             der in bevorzugter Weise für die erfindungsgemäße
             Schaltungsanordnung Verwendung findet,

Figur 2      eine weitere Ausgestaltung einer bekannten Schaltungsanordnung,

Figur 3      eine Schaltungsanordnung zur Verhinderung eines Ratterns,

Figur 4      eine Schaltungsanordnung zur Verbesserung der
             Überwachung des Nulleiters auf Erdschluß,

Figur 5      eine Schaltungsanordnung zur Verbesserung des
             Anprechens auf pulsierende Gleichfehlerströme, die
             durch Phasenanschnittssteuerungen erzeugt werden,

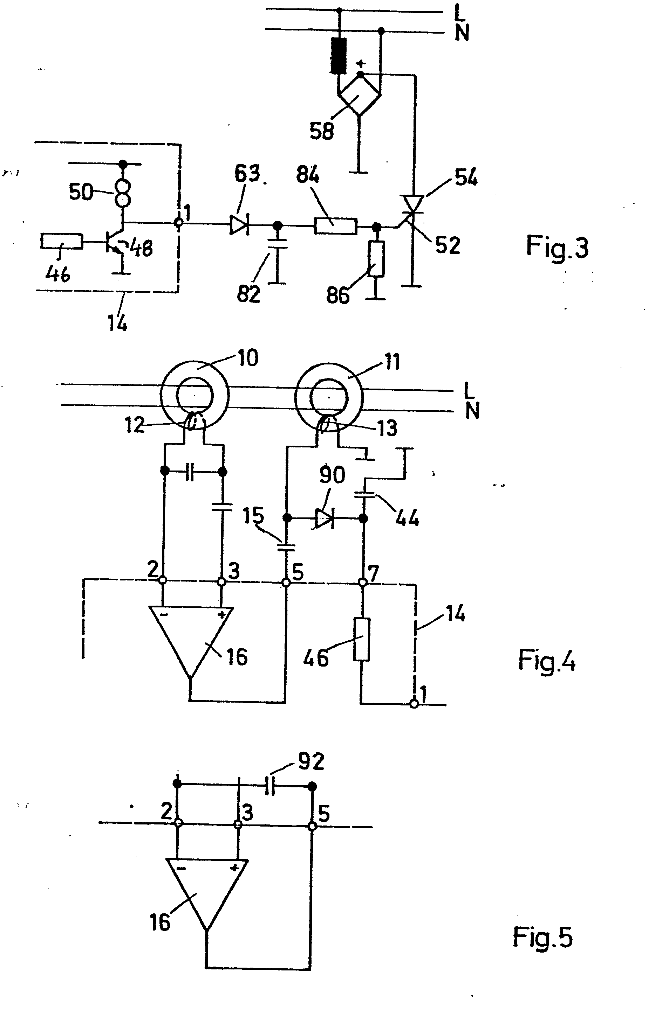

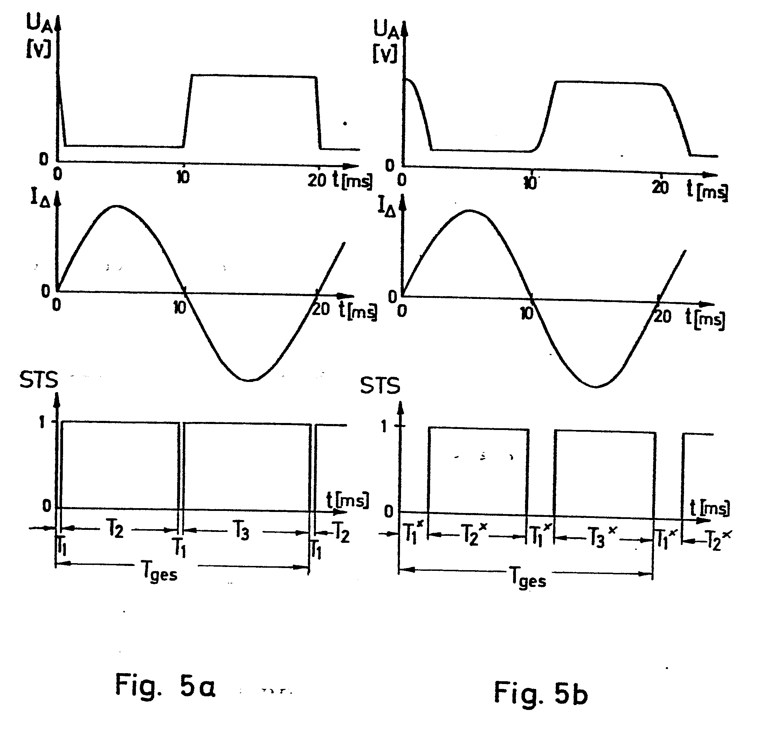

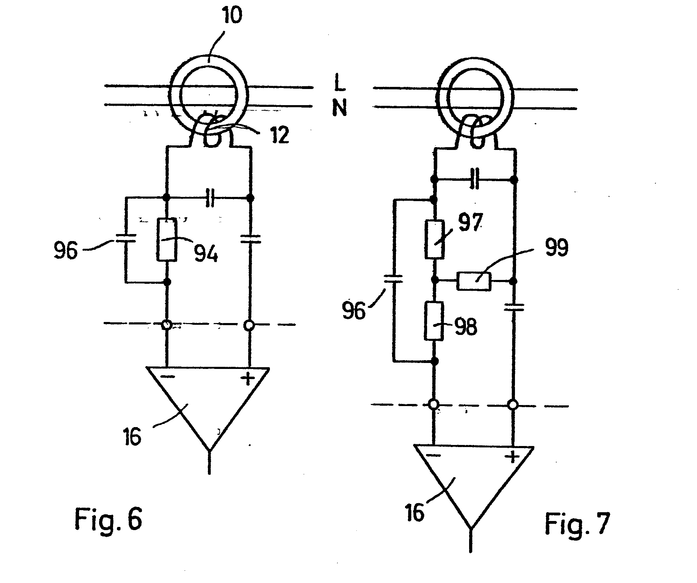

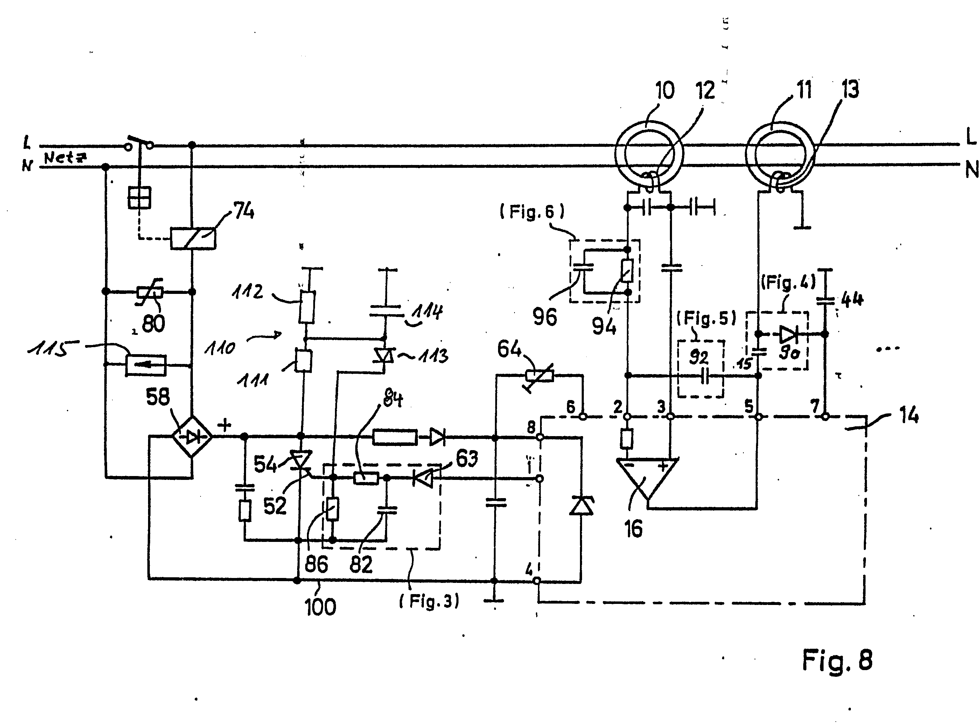

Figur 5a, b  jeweils grafische Darstellungen der Ausgangsspan-
             nung des Operationsverstärkers, des Fehlerstromes
             und eines den Ladekondensator ansteuernden Signales
             über der Zeit, ohne die kapazitive Rückkopplung
             der Figur 5 und mit kapazitiver Rückkopplung der
             Figur 5,

Figuren 6    zwei Ausführungsformen von Vorschaltgliedern zur
und 7        Anpassung des Summenstromwandlers an den Operationsverstärker bei höheren Fehlernennströmen
             als z. B. 5 Milliampere bei Verwendung des
             Schaltkreises LM 1851, also von z. B. $I_{\Delta n} =$
             10 Milliampere oder 30 Milliampere bei zusätzlich geforderter Erfassung von pulsierenden
             Gleichfehlerströmen.

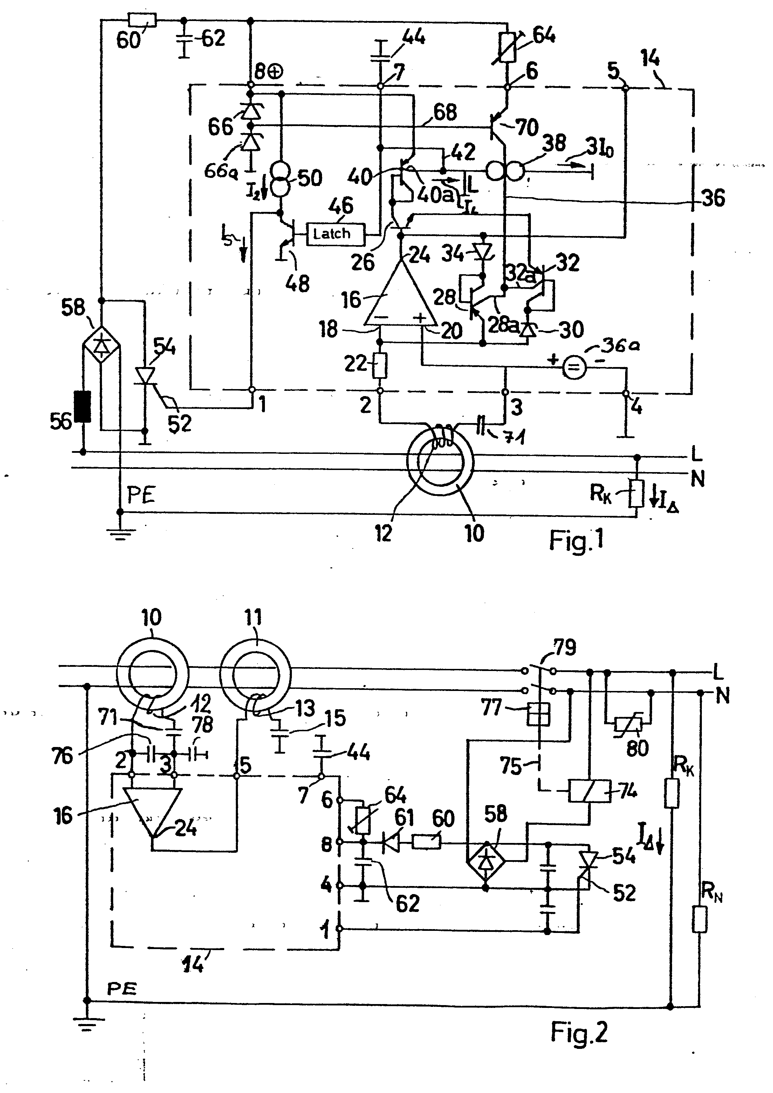

Figur 8 eine Schaltungsanordnung, in der alle in den Figuren 1 bis 7 gegebenen zusätzlichen Beschaltungen verwirklicht und zusätzlich die erfindungsgemäßen Zusatzelemente vorgesehen sind und

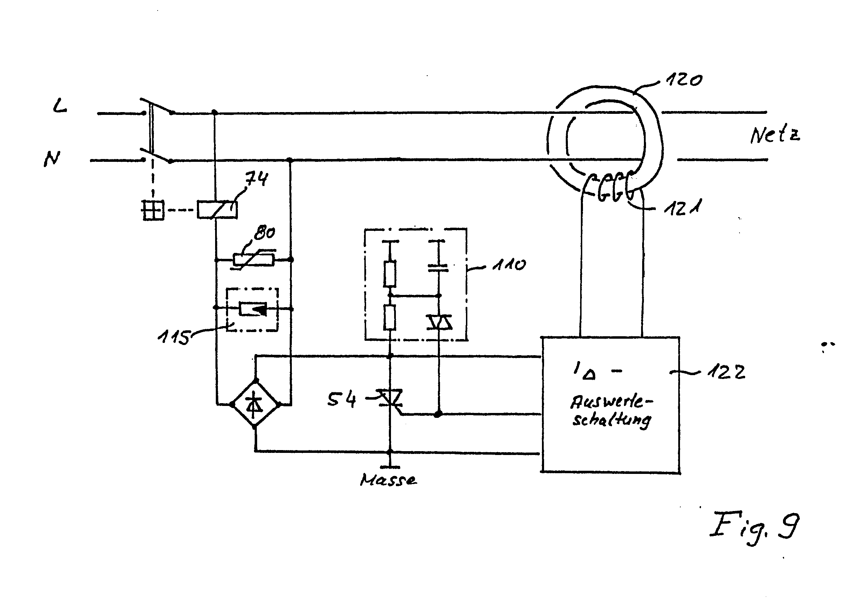

Figur 9 eine schematisch verkürzte Darstellung der Fig. 8.

Ein Netz einer elektrischen Versorgung besitzt einen Phasenleiter L und einen Neutralleiter N. Die beiden Leiter L und N sind durch einen Summenstromwandler 10 hindurchgeführt und wirken als Primärwicklung. Der Summenstromwandler 10 besitzt ferner eine Sekundärwicklung 12, die auf Eingänge 2 und 3 eines strichliert dargestellten integrierten Schaltkreises 14 aufgeschaltet sind. Dieser integrierte Schaltkreis ist ein Schaltkreis, der von der Firma National Semiconductor, Corp. USA, unter der Bezeichnung LM 1851 in den Handel gebracht wird. Im Inneren des integrierten Schaltkreises 14 befindet sich ein Operationsverstärker 16 mit einem sogenannten invertierenden Eingang 18 und einem nicht invertierenden Eingang 20. Der invertierende Eingang ist über einen Eingangswiderstand 22 mit der Eingangsklemme 2 verbunden, wogegen der nicht invertierende Eingang 20 mit der Eingangsklemme 3 verbunden ist. Die Sekundärwicklung 12 ist also auf den Eingang 18 und den Eingang 20 des Operationsverstärkers geschaltet.

Der Ausgang 24 des Operationsverstärkers ist einmal auf die Basis eines Transistors 26 und zum anderen auf die Ausgangsklemme 5 des integrierten Schaltkreises 14 geschaltet. Der invertierende Eingang 18 ist mit dem Emitter eines Mehrfachkollektortransistors 28 und der Anode einer Z-Diode 3o verbunden. Die Kathode der Z-Diode 30 ist mit der Basis und einem Kollektor eines zweiten Mehrfachkollektortransistors 32 verbunden. Der Transistor 32 wird ebenso wie der Transistor 28 in Stromspiegelschaltung betrieben.

Der Ausgang des Operationsverstärkers 24 ist mit der Anode einer weiteren Z-Diode 34 verbunden, deren Kathode ebenso wie die der Z-Diode 30 auf die Basis und einen Kollektor des Transisderen Kollektoren der beiden Transistoren 28 und 32 sind miteinander und mit dem Steuerungseingang eines steuerbaren Konstantstromgenerators 38 verbunden. Der Emitter des Transistors 26 ist mit dem Emitter des Transistors 32 verbunden, wogegen der Kollektor des Transistors 26 mit dem Kollektor und der Basis eines in Stromspiegelschaltung betriebenen weiteren Mehrfachkollektortransistors 40 verbunden ist. Der zweite Kollektor 40a des Transistors 40 ist mit dem Konstantstromgenerator 38 verbunden, wogegen der Emitter des Transistors 40 auf die Versorgungs-Eingangsklemme 8 geschaltet ist. Der zweite Kollektor 40a des Transistors 40 ist außerdem mit der Klemme 7 des integrierten Schaltkreises 14 verbunden. Mit der Klemme 7 ist ein außerhalb des Schaltkreises befindlicher zeitbestimmender Kondensator 44 verbunden, dessen zweiter Anschluß mit der Klemme 4 des integrierten Schaltkreises verbunden ist, an der der Minuspol der Versorungsspannung (Masse bzw. OV) angeschlossen wird.

Der zweite Kollektor 40a des Transistors ist darüber hinaus mit einem im IC 14 vorhandenen Latch-Speicher 46 verbunden, dessen Ausgang auf die Basis eines Schalttransistors 48 wirkt. Der Emitter des Transistors 48 liegt an OV (Masse), während der Kollektor dieses Transistors über einen weiteren Konstantstromgenerator 50 an die Eingangsklemme 8 angeschaltet ist. Der Kollektor ist ferner mit der Ausgangsklemme 1 verbunden, die auf das Gate 52 eines Thyristors 54 aufgeschaltet ist, um den Thyristor in Durchlaßrichtung anzusteuern. Der Phasenleiter L ist über die Auslösespule 56 eines Leitungsschutzschalters mit einem Wechselstrom-Anschluß eines Brückengleichrichters 58 verbunden, deren zweiter Wechselstromanschluß mit dem N-Leiter und außerdem mit Erde und einem Schutzleiter PE verbunden ist. Der positive Spannung führende Anschluß des Gleichrichters 58 ist mit der Anode des Thyristors und der negative Anschluß des Gleichrichters 58 mit der Kathode des Thyristors und Masse verbunden. Die Anode des Thyristors ist ferner mit einem Widerstand

0226704

60 verbunden, dessen zweiter Anschluß mit der Speisespannungsklemme 8 des Schaltkreises 14 verbunden ist. Parallel zur Klemme 8 und Masse-Klemme 4 liegt ein Glättungs-Kondensa-tor 62. Zur Spannungstabilisierung dient eine Kette von Z-Dioden und Dioden, die hier durch zwei Z-Dioden 66 und 66a symbolisch dargestellt ist. Die Anode der einen Z-Diode 66 ist mit der Basis eines Transistors 70 verbunden, dessen Emitter mit der Klemme 6 und einem verstellbaren Widerstand 64 verbunden ist, dessen zweiter Anschluß an die Klemme 8 angeschlossen wird. Der Kollektor des Transistors 70 ist mit der Konstantstromquelle 38 verbunden. Das Schaltbild des integrierten Schaltkreises 14 ist lediglich schematisch dargestellt und entspricht im wesentlichen dem Schaltbild, wie es in dem Prospekt der Firma National Semiconductor April 1980 zu ersehen ist. Es wurde ergänzt durch den Transistor 70 und die wichtigsten äußeren Schaltelemente. Im Prospekt ist auch ein genaues Schaltbild mit allen wesentlichen Details veröffentlicht.

Die Wirkungsweise der Anordnung ist nun wie folgt:

Fließt auf der Lastseite kein Strom vom Leiter L gegen Erde bzw. zum Schutzleiter PE, so steht an den Klemmen 2 und 3 kein Fehlerstromsignal an. Die von einer Hilfsspannungsquelle 36 im integrierten Schaltkreis 14 erzeugte Spannung steht sowohl auf dem nichtinvertierenden Eingang 18 als auch auf dem invertierenden Eingang 20 des Operationsverstärkers an, wodurch am Ausgang 24 des Operationsverstärkers ein Mittelspannungssignal abgegeben wird. Aufgrund dieses Signales wird von den Transistoren 28 bzw. 32 auf den Konstantstromgenerator 38 ein Status-Logisch-Null-Signal (STS = 0) abgegeben, wodurch der Konstantstromgenerator so eingestellt wird, daß der evtl. aufgeladene Kondensator 44 mit einem La-destrom von $I_1 = 3 \times I_0$ entladen wird. Diese Einstellung baut eine durch Störimpulse aufgetretene Spannung am Kondensator 44 rasch ab, so daß eine wirksame Störunterdrückung erreicht wird.

Wenn z. B. durch Berührung des Leiters L durch einen mit Erde bzw. PE verbundenen Menschen mit einem Körperwiderstand $R_k$ ein Fehlerstrom auftritt, wird in der Sekundärwicklung 12 ein Fehlerstromsignal erzeugt, welches über die Eingangsklemme 2 und den Eingangswiderstand 22 auf den invertierenden Eingang 18 des Verstärkers eingegeben wird. Wenn am Eingang 18 das Signal mit der negativen Halbwelle ansteht, ist der Ausgang 24 des Operationsverstärkers 16 positiv, so daß die Z-Diode 30 über die Transistoren 26 und 40 sowie über den Transistor 32 leitend wird und an dem weiteren Kollektor 32a des Transistors 32 ein Status-Logisch-1-Signal (STS) erzeugt wird. Dieses 1- Signal schaltet den Konstantstromgenerator um, so daß der vom Generator gegen Masse fließende Strom $I_1 = I_0$ ist.

Über den Gleichrichter 58 wird über den Vorwiderstand 60 und die Klemme 8 der integrierte Schaltkreis 14 mit Energie versorgt und zwar stabilisiert durch die Diodenkette 66 und 66a. Während der negativen Halbwelle, wenn also am Ausgang des Verstärkers ein positives Signal ansteht, wird - wie oben erwähnt - der Transistor 26 durchgesteuert, der gleichzeitig auch den Transistor 40 in leitenden Zustand bringt, wodurch von der Klemme 8 ein Strom hin zum Emitter des Transistors 40 fließt, wodurch an dem zweiten Kollektor 40a ein Strom $I_L$ erzeugt wird, der, um den Konstantstrom $I_0$ vermindert, also mit $I_L - I_0$, den Kondensator 44 zeitbestimmender Kondensator) auflädt. Die Aufladung des Kondensators 44 erfolgt somit nur während der negativen Halbwelle. Während der positiven Halbwelle an der Klemme 2 wird der Eingang 18 des Operationsverstärkers 16 positiv gegenüber dem Ausgang 24, wodurch die Z-Diode 34 leitend wird, und den Transistor 28 ansteuert, so daß über den weiteren Kollektor 28a ebenfalls ein Status-Logisch-1-Signal (STS) dem Konstantstromgeber 38 zugeführt wird, so daß auch dann ein Strom $I_1 = I_0$ über den Konstantstromgeber nach Null Volt abfließt.

Wenn also ein Wert $3 \times I_0$ vom Konstantstromgenerator 38 abfließt, wird der Kondensator 44 schnell entladen, so daß dadurch eine Aufladung des Kondensators 44 durch Störimpulse nicht zu einer Auslösung führt. Wenn aufgrund eines Status-1-Signals auf der Leitung 36 vom Konstantstromgeber 38 ein Strom lediglich mit $I_0$ abfließt, dann wird vom Kondensator 44 ein wesentlich geringerer Teil abgezogen, nämlich nur 1/3 des Teiles, der bei Fehlen eines Fehlerstromes abgezogen wird. Die restlichen 2/3 des Stromes können dann bei negativem Signal an der Klemme 2 zum Setzen des Speichers 46 bzw. des Latch 46 verwendet werden. Wenn also von dem Kondensator 44 ein größerer Stromanteil zum Latch 46 fließt, wird dieses gesetzt, wodurch der Transistor 48 angesteuert wird, so daß dieser vom leitenden in den Sperrzustand umgesteuert wird und über den weiteren Konstantstromgeber 50 einen Strom $I_S$ von der Versorgungsspannung hin zu der Steuerelektrode 52 des Thyristors 54 durchläßt, so daß der Thyristor 54 durchgezündet wird und der Auslöser 56 ansprechen kann. Die Größe des Stromes $I_1 = I_0$ bzw. $I_1 = 3 \times I_0$, die der Aufladung des Kondensators 44 entgegenwirkt, wird von der Z-Diode 66, die über eine Leitung 68 mit der Basis eines Transistors 70 verbunden ist, und einem mit dem Emitter des Transistors 70 verbundenen einstellbaren Widerstand 64 bestimmt. Mit letzterem und damit mit dem der Ladung des Kondensators 44 entgegenwirkenden Strom $I_0$ kann der zur Auslösung führende Fehlernennstrom eingestellt werden. Dabei können gleichzeitig die Toleranzen der beteiligten Bauelemente einschließlich des integrierten Schaltkreises 14 sowie des Summenstromwandlers 10 erfaßt werden.

In der Figur 2 ist das Schaltbild gemäß der Figur 1 im wesentlichen unverändert belassen worden, wobei bestimmte, hier nicht interessierende Komponenten zwecks besserer Übersichtlichkeit weggelassen worden sind. Die Speisung des integrierten Schaltkreises erfolgt, wie oben erwähnt, über den Brückengleichrichter 58 und den Vorwiderstand 60. Dem Widerstand 60 folgt eine

0226704

Entkopplungsdiode 61, und den Eingängen 4 bzw. 8 des integrierten Schaltkreises ist ein Glättungskondensator 62 parallelgeschaltet. Parallel zu den Klemmen 6 und 8 befindet sich der Einstell- bzw. Verstellwiderstand 64. Der Vorwiderstand 60 und die in Reihe damit liegende Diode 61 ist auf der Eingangsklemme 8 geschaltet. Parallel zu den Klemmen 2 und 3 liegt ein Kondensator 76 zur Unterdrückung von Störimpulsen aus dem Netz. Zwischen der Gleichstromquelle 36a und der Wicklung 12 des Summenstromwandlers 10, vorzugsweise - wie in der Zeichnung, Figur 1, dargestellt, zwischen der Klemme 3 und der Wicklung 12, wird ein Kondensator 71 eingesetzt, der in Reihe mit der Sekundärwicklung liegt und zur Gleichstromentkopplung dient.

Im übrigen besteht der Unterschied der Anordnung gemäß der Figur 1 und der der Figur 2 im wesentlichen darin, daß neben dem Summenstromwandler 10 ein weiterer Wandler 11 vorgesehen ist, durch den die Leitungen L und N als eine Wicklung hindurch verlegt sind. Der Wandler 11 besitzt eine weitere Wicklung 13, deren eines Ende mit der Eingangsklemme 5, also dem Ausgang 24 des Operationsverstärkers 16 verbunden ist, wogegen das andere Ende der Wicklung 13 mit einem Kondnsator 15 verbunden ist. Ferner ist in der Schaltungsanordnung nach der Figur 2 ein der Auslösespule 56 entsprechendes Auslöserelais 74 eingezeichnet, die über eine Wirklinie 75 auf ein Schaltschloß 77 einwirkt, das im Falle eines Fehlerstromes Kontakte 79 in den Leitungen L und N oder nur einpolig einen Kontakt in der Leitung L öffnet. Der Auslösestrom wird der Auslösespule 56 von der Wechselstromseite des Gleichrichters 58 zugeführt. Der Thyristor 54 liegt anodenseitig am Pluspol des Gleichrichters, so daß bei einem am Gate 52 des Thyristors anstehenden Zündsignal die Auslösung des Leitungsschutzschalters in beiden Halbwellen des Netzes erfolgen kann.

0226704

Ein Fehlerstrom (veranlaßt durch einen Körperstromwiderstand $R_K$ zwischen L und Erde bzw. Schutzerdeleiter PE), wird als geometrische Summe der Ströme im Phasenleiter und im Neutralleiter N vom Summenstromwandler 10, der zweckmäßigerweise ein Windungszahlenverhältnis von z.B. 1 : 1000 besitzt, erfaßt und auf die beiden Eingänge des Operationsverstärkers 16 geschaltet.

An Klemme 3 des Schaltkreises liegt ein Kondensator 78 gegen OV (Masse). Er dient zusammen mit dem Kondensator 76 zur Unterdrückung von Störimpulsen aus dem Netz. Ein Varistor 80, der zwischen L und N liegt, bzw. auch in einer anderen, in Figur 8 gezeigten Ausführungsform zwischen dem Leiter N und der Verbindung zwischen der Auslöserspule 56 und dem Gleichrichter 58 liegen kann, schützt die Schaltung gegen Überspannungsimpulse aus dem Netz.

Die letztgenannte, nicht gezeichnete Anordnung hat den Vorteil, daß die Impedanz der Auslöserspule 56 zum Überlastschutz des Varistors 80 ausgenutzt werden kann. Durch die Aufschaltung des Ausgangs 24 des Operationsverstärkers 16 auf die Wicklung 13 des zweiten Wandlers 11, der z.B. ein Windungszahlen-Verhältnis 1 : 200 besitzt, kann der Neutralleiter auf Erdschluß überwacht werden. Wenn ein Erdschluß im Neutralleiter N über einen Erdschlußwiderstand $R_N$ auftritt, kommt ein Kurzschlußkreis über den Neutralleiter in dem Summenstromwandler 10 und dem Wandler 11 zustande, wodurch sich, bei phasenrichtigem Anschluß beider Sekundärwicklungen, eine positive Rückkopplung über den Operationsverstärker 16 ergibt und eine Schwingung im Mittelfrequenz-(kHz-) Gebiet angefacht wird.
Diese Schwingung mit größerer Amplitude führt wie ein Fehlerstrom zwischen dem Leiter L und der Erde PE zur Auslösung des Schalters 77. Diese Selbsterregung tritt auch bei gleichzeitig anstehendem Fehlerstrom $I_\Delta$ zwischen L und N (über Widerstand $R_K$) auf.

0226704

Bei Betrieb der Schaltungsanordnung gemäß der Figur 2 tritt insbesondere bei Fehlerströmen in der Größenordnung des Ansprechwertes des Fehlerstromschutzschalters ein starkes mechanisches Rattern auf, das eine vorzeitige Zerstörung des Auslösers bewirken kann. Dieses Rattern wird dadurch hervorgerufen, daß beim Zünden des Thyristors 54 der Ausgang des Brückengleichrichters 58 durch den Thyristor kurzgeschlossen wird und damit die Speisespannung des integrierten Schaltkreises 14 verschwindet.

Die Vorschaltung einer Diode 61 kann allerdings nicht verhindern, daß die von dem Kondensator 62 gestützte Spannung unter die für den in dem Schaltkreis 14 vorhandenen Latch-Speicher 46 notwendige Spannung sinkt.

Dann verliert das Latch die gespeicherte Information für die Zündung des Thyristors, so daß ein neuer Aufbau der Zündbedingung erforderlich wird. Eine befriedigende Lösung, um ein Pulsieren der Zündspannung und ein dadurch hervorgerufenes Rattern zu verhindern, ist in der Figur 3 dargestellt. An der Klemme 1 des integrierten Schaltkreises 14 ist eine Diode 63 angeschlossen, die hin zum Gate 52 in Durchlaßrichtung angeordnet ist. An der Katode der Diode 63 ist ein mit seinem zweiten Anschluß an Masse liegender Kondensator 82 angeschaltet. In Reihe mit der Diode 61 befindet sich ein Widerstand 84, und parallel zum Gate ist ein weiterer Widerstand 86 vorgesehen.

Die Aufladung des Kondensators 82 erfolgt über den im integrierten Schaltkreis angeordneten Konstantstromgenerator 50. Die Diode 63 dient zur Verhinderung des Abflusses der Ladung des Kondensators 82 über den bei abgefallenem Latch 46 kurzzeitig leitend werdenden Transistor 48. Der Widerstand 84 dient zur Begrenzung des Entladestromes des Kondensators 82 und der hochohmige Widerstand 86 zwischen Gate und Katode des Thyristors zur Verhinderung einer unerwünschten Auslösung des Thyristors durch Störimpulse. Mit der Anordnung gem. der Figur 3 gelingt es, den Zündbefehl an der Klemme 1 bis zur nächsten Halbwelle der Netzspannung zu speichern und eine erneute Zündung des Thyristors einzuleiten. Wenn z.B. der erste Zündbefehl am Ende der ersten Halbwelle auftritt, die Stromflußzeit aber nicht zum Auslösen ausreicht, erfolgt sofort eine neue Zündung am Anfang der zweiten Halbwelle, wodurch eine sichere Auslösung des Schalters erreicht wird.

Dieser sogenannte Ratterschutz, der ein pulsierendes Anziehen des Schaltschlosses verhindert, kann bei allen Arten von Auslöse-steuerungen eingesetzt werden, die mit Thyristoren arbeiten, deren Gate durch eine elektronische Steuereinrichtung gesteuert wird.

Eine Verbesserung der Überwachung des Neutralleiters auf Erdschluß erfolgt mit einer Schaltungsanordnung gem. der Figur 4. Bei der Neutralleiterüberwachung ist bei einem Erdschlußfehler eine möglichst schnelle und sichere Auslösung des Schalters erwünscht. Gemäß der Anordnung der Figur 2 ist die Wicklung 13 des Wandlers 11 mit dem Ausgang des Operationsverstärkers verbunden. In der Anordnung gem. der Figur 4 ist an der Ausgangsklemme 5 des Schaltkreises, die mit dem Operationsverstärkerausgang in Verbindung steht, ein Anschluß des Kondensators 15 angeschlossen, wogegen der zweite Anschluß des Kondensators mit einem Ende der Wicklung 13 verbunden ist. Das andere Ende der Wicklung 13 liegt an Null Volt (Masse). Zwischen dem zweiten Anschluß des Kondensators 15 und der Klemme 7 ist eine Diode 90 angeordnet , wobei die Kathode der Diode 90 an Klemme 7 liegt. An Klemme 7 ist auch der Kondensator 44 angeschlossen, dessen zweiter Anschluß an Masse liegt. Die bei einem Erdschluß des Neutralleiters selbst erregende mittelfrequente Schwingung lädt dann mit ihrer ersten, die Schwellenspannung der Diode 90 überschreitenden Halbwelle den Kondensator 44 soweit auf, daß das im Schaltkreis 14 befindliche Latch 46 gesetzt wird und die Zündung des Thyristors 54 und damit die Auslösung des Schutzschalters einleitet (vgl. Beschreibung Figur 1 und 2). Die Anordnung gemäß der Figur 4 kann unabhängig von der Schaltungsanordnung gemäß der Figur 3 verwendet werden; in einer optimal wirkenden Schaltungsanordnung allerdings würden beide Maßnahmen gleichzeitig verwendet werden.

Soll ein Personenschutzautomat nicht nur bei sinusförmigen Fehlerströmen mit vorgegebenem Fehlerstromnennwert, sondern auch bei
pulsierenden Gleichfehlerströmen in den von der VDE-Vorschrift
0664/...80 bestimmten Grenzen auslösen, dann sind bei der Schaltung nach der Figur 2 noch weitere zusätzliche Maßnahmen erforderlich. So weist ein nach Figur 2 aufgebauter Automat, der z.B.
für einen Nennfehlerstrom von 5 Milliampere (sinusförmig) mit
dem Widerstand 64 (vgl. Figur 1) auf einen Ansprechwert von
3,75 Milliampere (sinusförmig) abgeglichen ist, bei pulsierenden
Gleichströmen weit über dem obengenannten Maximalwert $1,4 \times I_{\Delta Nenn}$
liegende Ansprechwerte auf, wobei nach der VDE-Vorschrift die
Prüfung bei Steuerwinkeln von 0° elektrisch und 180° elektrisch,
90° und 270° elektrisch und 135° und 315° elektrisch zu erfüllen
ist. (Der Abgleich bei 3,75 Milliampere ergibt sich aus der VDE-
Forderung, daß bei sinusförmigen Fehlerströmen die Auslösung
zwischen dem 0,5- und einfachem Wert des Nennfehlerstromes erfolgen muß.) Eine einfache und wirksame Maßnahme zur Einhaltung der
vorgeschriebenen Grenzwerte ergibt sich durch eine zusätzliche
kapazitive Rückführung des Operationsverstärkers 16, wobei entsprechend Figur 5 die Klemmen 2 und 5 des integrierten Schaltkreise durch einen Kondensator 92 überbrückt werden.

Die Größe des Kondensators 92 ist wesentlich vom Nennfehlerstrom abhängig. In der Figur 5a ist die Spannung $U_A$ am Ausgang des Operationsverstärkers 16 über der Zeit ohne Kondensator 92, also ohne zusätzliche kapazitive Rückführung dargestellt.
Dies ist der Fall, wenn der darunter eingetragene Fehlerstrom I
ausreichend groß ist, was bedeutet, daß die in den Rückführungen
auftretenden Spannungen größer als die Zener-Spannungen der Z-
Dioden 30 und 34 sind, so daß diese leitend werden. Die am Operationsverstärker 16 auftretende Ausgangsspannung $U_A$ entspricht
nahezu einer Rechteckspannung. Das dann von den Transistoren 28
und 32 abgegebene Status-Signal STS ist fast dauernd logisch 1 und nur beim Nulldurchgang des Fehlerstromes ergeben sich kurze Zeiten $T_1$, bei denen dieses Signal Null wird. Man erkennt den Verlauf des Status-Signals STS aus der unteren Kurve der Figur 5a.

Wenn der Kondensator 92 beispielsweise die Kapazität von 100 pF hat, dann erhält man eine Ausgangsspannung $U_A$ gem. Figur 5b. Die Zeiten, bei denen ein STS-Null-Signal auftritt, nehmen aufgrund des Kurvenverlaufes der Kurve $U_A$ deutlich zu (Zeit $T_1^*$). Wie oben bei der Funktionsweise der Schaltungsanordnung gem. den Figuren 1 und 2 beschrieben, wird der Kondensator 44 lediglich während der am Eingang 18 des Operationsverstärkers 16 anstehenden negativen Halbwelle aufgeladen. Dies bedeutet, daß er lediglich während der Zeit $T_3$ oder $T_3^*$ aufgeladen und während der Teit $T_2$ und $T_2^*$ mit dem Strom $I_0$ entladen wird. Während des Überganges vom Maximal- zum Minimalwert von $U_A$ ist keine der beiden Z-Dioden 34 und 30 leitend und damit STS = 0, wodurch der Kondensator 44 mit dem Strom $3 \times I_0$ entladen wird. Maßgebend für das Setzen des Speichers 46 und damit der Auslösung ist, daß während der Periodendauer $T_{gesamt}$ des Fehlerstromes die Ladung des zeitbestimmenden Kondensators 44 die Entladung übersteigt. Wie man nachweisen kann, muß der Entladestrom bei zusätzlicher kapazitiver Rückführung, also bei Einbau des Kondensators 92 kleiner sein als bei Betrieb ohne den Rückführungskondensator, was sich auch bei der Einstellung des Widerstandes 64 hin zu einem größeren Widerstandswert zeigt. Während bei pulsierendem Gleichstrom ohne diese kapazitive Rückführung die Effektivwerte des Auslösestromes oft über den zulässigen Werten 1,4 mal dem Nennfehlerstrom liegen, bleiben sie mit der Rückführung in den zulässigen Grenzen.

Bei Pulsstrombetrieb ergeben sich wegen des steilen Anstieges der Stromimpulse bei 0° el. und 180° el., insbesondere aber bei 90° el. und 270° el. sowie bei 135° el. und 315° el. kürzere Zeiten mit dreifachem Entladestrom $I_1 = 3 \times I_0$ des Kondensators 44, so daß die für die Auslösung erforderlichen Ansprechströme gegenüber dem Betrieb ohne Rückführungskodensator verringert werden.

Dadurch dient bei der erfindungsgemäßen Schaltungsanordnung der Rückführungskondensator 22 nicht nur zur Integration, sondern auch dazu, die Zeiten, bei denen eine Entladung des Kondensators 44 mit $3 \times I_0$ erfolgt, abhängig von der Form des Fehlerstromes (sinusförmiger Strom oder Pulsstrom) zu reduzieren. Somit löst der Kondensator 92 bei der erfindungsgemäßen Schaltungsanordnung einen Steuerungsvorgang aus.

Anstatt eines einzigen Widerstandes 94, wie er in der Figur 6 dargestellt ist, können auch drei T-förmig einander zugeordnete Widerstände 97, 98 und 99 verwendet werden. Zwischen den beiden Widerständen 97 und 98 und parallel zu den Anschlüssen 2 und 3 des integrierten Schaltkreises, also parallel zu dem invertierenden und dem nichtinvertierenden Eingang ist ein weiterer Widerstand 99 geschaltet.

Damit jedoch mittelfrequenter Strom ungehindert zum Operationsverstärker 16 fließen kann, wird parallel zu dem Widerstand 94 bzw. parallel zu der Reihenschaltung der Widerstände 97 und 98 ein Kondensator 96 geschaltet, der den mittelfrequenten Strom ungehindert passieren läßt.

Die Schaltung gemäß der Figur 6 ist z. B. bei Fehlerströmen von $I_{\Delta n} = 10$ Milliampere geeignet, wogegen die Schaltungsanordnung gemäß der Figur 7 bei größeren Nennfehlerströmen, z. B. bei $I_{\Delta n} = 30$ Milliampere geeignet ist. Durch die beiden letztgenannten Schaltungsanordnungen kann eine Anpassung an die vorgeschriebenen Nennfehlerstromgrenzwerte auch bei pulsierenden Gleichfehlerströmen bewirkt werden und zwar bei gleichzeitiger Beibehaltung der einwandfreien Neutralleiterüberwachung auf Erdschluß.

Der Schaltkreis LM1851 ist entsprechend der amerikanischen Norm UL 943 für sinusförmigen Wechselstrom für einen Fehlerstrom-Nennwert von $I_{\Delta N}$ = 5 mA ausgelegt.

Während bei sinusförmigen Fehlerströmen der Abgleich größerer Werte der Nennfehlerströme, beispielsweise bei 10 oder 30 Milliampere lediglich durch Änderung des Widerstandes 64 möglich ist, ist dies bei pulsierenden Gleichfehlerströmen nicht mehr der Fall. Man müßte bei einem Nennfehlerstrom von 30 Milliampere das Übersetzungsverhältnis des Fehlerstrom-Summenstromwandlers 10 von beispielsweise 1 : 1000 auf 1 : 6000 ändern, um zu erreichen, daß derselbe Strom im Eingangswiderstand des Operationsverstärkers wie bei einem Fehlerstrom von 5 Milliampere eingestellt wird. Durch Beschaltung des Operationsverstärkers mit dem Rückführungskondensator 92 können nunmehr auch pulsierende Gleichfehlerströme beherrscht werden. Allerdings wird der Platzbedarf größer, da wegen der höheren Windungszahl ein größerer Ringkerntransformator (Summenstromwandler) mit größerem Platzbedarf verwendet werden muß. Man kann aber den Summenstromwandler 10 mit einem Übersetzungsverhältnis von 1 : 1000 beispielsweise beibehalten, wenn man zusätzliche Anpassungswiderstände vorsieht. Am einfachsten wäre es dann, wenn zwischen die Eingangsklemmen 2 und 3 des integrierten Schaltkreises, also parallel zum Eingang des Operationsverstärkers ein Lastwiderstand eingeschaltet wird, der so bemessen ist, daß bei sinusförmigem Fehlerstrom im Eingangswiderstand des Operationsverstärkers 22 (vgl. Figur 1) der gleiche Strom wie bei einem Fehlerstrom von 5 Milliampere fließt. Nachteilig ist diese Beschaltung für die Selbsterregung mittelfrequenter Schwingungen (vgl. Beschreibung Fig. 2) bei einem Erdschluß des Neutralleiters. Zweckmäßiger sind diejenigen Schaltungsanordnungen, die in den Figuren 6 und 7 dargestellt sind. Dabei ist zwischen dem invertierenden Eingang des Operationsverstärkers 16 und der Sekundärwicklung 12 ein Lastwiderstand geschaltet, mit dem eine Einstellung des Nennfehlerstromes bewirkt wird. Mit anderen Worten: Der Widerstand 94 dient dazu, den Eingangsstrom auf dem invertierenden Eingang des Operationsverstärkers 16 auf den für den Operationsverstärker typischen Nennwert zu begrenzen.

Die in den Figuren 3 und 4 dargestellten Schaltungsanordnungen können im Prinzip bei jedem geeigneten integrierten Schaltkreis angewendet werden, vorausgesetzt, dieser Schaltkreis besitzt einen Operationsverstärker, auf den die von der Sekundärwicklung des Summenstromwandlers 10 angegebenen Signale aufgeschaltet werden, ferner einen Speicher ähnlich dem Speicher 46, der einen Thyristor anzusteuern in der Lage ist. Die Anordnung gemäß der Figuren 5, 6 und 7, also die kapazitive Rückführung beim Operationsverstärker und die Vorschaltglieder, sind zunächst nur für den obengenannten integrierten Fehlerstrom-Erfassungsbaustein LM1851 oder nach dem gleichen Prinzip arbeitenden Schaltkreis gedacht.

Die einzelnen Maßnahmen gem. den Figuren 3 bis 7 können, wie oben schon erwähnt, jeweils unabhängig voneinander realisiert werden. Es besteht natürlich auch die Möglichkeit, alle diese Maßnahmen der Figuren 3 bis 7 in einer einzigen Schaltung zu realisieren, was zu einer Schaltungsanordnung gem. der Fig. 8 führt. Dort sind die einzelnen Zusatzkomponenten, die einen Ratterschutz, eine verbesserte Überwachung des Neutralleiters gegen Erdschluß, eine verbesserte Auslösung bei pulsierenden Gleichfehlerströmen und eine Zusatzbeschaltung des ersten Summenstromwandlers bringen, mit strichpunktierten Linien eingerahmt. Ferner sind die zugehörigen Figurenzahlen beigeschrieben, so daß die Übersichtlichkeit der Figur 8 verbessert ist. Die Ausgangsklemme 1 ist auf die Diode 63 geschaltet, an deren Katode der Kondensator 82 anliegt. In Reihe mit der Diode 63 liegt der Widerstand 84 und parallel zum Gate ist der Widerstand 86 angeordnet. Die freien Enden des Widerstandes 86 und des Kondensators 82 sind dann auf die Katodenleitung des Thyristors 54 geschaltet, die selbst wiederum über eine Leitung 100 an Null Volt (Masse) anliegt.

0226704

Zur Verhinderung einer Zerstörung der elektronischen
Schaltungsanordnung gemäß den Figuren 1 bis 8 ist in der
Figur 8 eine Zusatzbeschaltung eingezeichnet, die wie
folgt aufgebaut ist:
Parallel zur Anode des Thyristors 54 und Masse ist ein
Spannungsteiler 110 mit den Widerständen 111 und 112
geschaltet. An die Verbindung zwischen den beiden Widerständen 111 und 112 ist ein Schwellwertschalter 113 der
als Diode, Zener-Diode, Trigger-Diode, -Triode oder ähnliches Schaltelement ausgebildet sein kann, geschaltet,
der außerdem mit dem Gate 52 des Thyristors 54 verbunden
ist. Zwischen dem Anschlußpunkt von Spannungsteiler und
Schwellwertschalter 113 und Masse ist zusätzlich ein
Verzögerungsglied inform eines Indegrationskondensators
114 geschaltet.

Wenn eine Überspannung z.B. dadurch auftritt, daß der
Differenzstrom-Schutzschalter fälschlicherweise anstatt
an 220 Volt an 380 Volt angeschaltet wird, dann wird
diese Überspannung mittels des Spannungsteilers 110 mit
den beiden Widerständen 111 und 112 und des nachgeschalteten Schwellwertschalters 113 detektiert. Wenn die
Überspannung ein bestimmtes Maß überschreitet, schaltet
der Schwellwertschalter 113 durch und steuert den Thyristor 54 an, wodurch das Auslöserelais 74 mit Strom versorgt wird. Die Abschaltung der Überspannung erfolgt
durch das Auslöserelais 74, das Schaltschloß 77 und den
Kontaktapparat 79 (siehe Figur 2) die alle schon von
vornherein Bestandteil des Differenzstromschutzschalters
sind.

Der Integrationskondensator 114 dient im wesentlichen
dazu, unerwünschte Abschaltungen bei kurzzeitigen Spannungsüberhöhungen zu unterdrücken.

In der Figur 8 ist noch eine weitere Lösung angegeben, wie eine Gefährdung der Schaltungsanordnung durch Überspannungen vermieden werden kann. Parallel zu dem Varistor 80 ist ein gasgefüllter Überspannungsableiter 115 eingeschaltet. Dieser Überspannungsableiter 115 ist auf einen die Überspannung abgestimmten Absprechwert ausgelegt. Der für einen Netzspannung von z.B. 220 Volt dimensionierte Varistor 80, der als Metalloxidvaristor ausgebildet ist, wird bei 380 Volt noch nicht so niederohmig, daß ein für das Auslöserelais 74 ausreichender Arbeitsstrom zum Fließen kommt. Der gasgefüllte Überspannungsableiter 115 wird beim Ansprechen jedoch so niederohmig, daß der Strom im Auslöserelais 74 eine ausreichende Höhe annehmen kann. Das Relais übernimmt dabei die Funktion eines Strombegrenzungswiderstandes, der immer erforderlich ist, wenn ein gasgefüllter Ableiter direkt an ein niederohmiges Netz parallel angeschlossen ist.

Der Spannungsteiler 110 zusammen mit dem Schwellwertschalter kann unabhängig von dem gasgefüllten Überspannungsableiter eingesetzt werden und umgekehrt. Beide Lösungen ergeben vorteilhafte Wirkung immer dann, wenn unerwünschte Überspannungen auf die Schaltungsanordnung gemäß der Figur 8 einwirken können. Insbesondere dann, wenn zwischen den Zuleitungen L und dem Nulleiter N nicht 220 Volt, sondern 380 Volt anstehen, die zur Zerstörung der Schaltungsanordnung führen würden.

Die Figur 9 zeigt die Schaltungsanordnung nach Figur 8 in allgemeiner Ausführung. Die Leiter L und N sind durch einen Differenzstromwandler 120 (der Begriff Fehlerstrom- oder Summenstromwandler könnte auch verwendet

0226704

werden) als Primärwicklungen hindurchgeführt. Um den Stromwandler 120 ist eine Sekundärwicklung 121 gewickelt, deren Enden an einer als Kasten dargestellten Schaltungsanordnung 122 angeschlossen sind, die eine Auswerteschaltung für die in der Sekundärwicklung 121 induzierte Spannung ist, wie sie in den Figuren 1 bis 8 dargestellt ist.

Natürlich könnte jede andere Schaltungsanordnung benutzt werden, sofern sie nur von der Netzspannung versorgt wird und die sekundärseitige Spannung erfassen kann. Diese Schaltungsanordnung 122 steuert wie für die Anordnungen der Figuren 1 bis 8 beschrieben, den Thyristor 54 an, der durchgeschaltet wird so daß durch das Relais 74 ein Strom fließen und das Relais 74 betätigen kann.

Ansprüche

1. Schaltungsanordnung zur Erfassung eines Differenz- bzw. Fehlerstromes in einem aus wenigstens einem Phasenleiter und einem Neutralleiter gebildeten Netz, mit wenigstens einem Summenstromwandler, dessen Primärwicklung durch die Phasenleiter und den Neutralleiter gebildet ist und dessen Sekundärwicklung bei Auftreten eines Fehlerstromes ein Differenzstromsignal abgibt, mit einer netzversorgten Einrichtung zum Verarbeiten und Verstärken des Differenzstromsignales zur Erzeugung eines vom Differenzstromsignal abhängigen Ausgangssignals, insbesondere einem handelsüblichen integrierten Schaltkreis, mit einem Operationsverstärker, auf dessen Eingänge die Enden der Sekundärwicklung geschaltet sind und mit einem durch einen in Abhängigkeit vom Differenzstromsignal auf- bzw. entladbaren Kondensator setzbaren Speicher, der das Ausgangssignal erzeugt, mit einem durch das Ausgangssignal der Einrichtung angesteuerten steuerbaren Halbleiterventil und mit einem Auslöser zum Betätigen von das Netz abschaltenden Schaltkontakten, welcher Auslöser beim Durchsteuern des Halbleiterventils mittels des Setzens Ausgangssignales anspricht, dadurch gekennzeichnet, daß parallel zur Steuerelektrode (52) und der Anode des steuerbaren Halbleiterventils (54) ein Schwellwertschalter (113) und ein erster Teilwiderstand (111) eines Spannungsteilers (110) geschaltet ist, und daß der andere Teilwiderstand (112) des Spannungsteilers (110) an Erde angeschlossen ist.

Mp.-Nr. 603/85                   24              28. Aug. 1985      0226704

2. Schaltungsanordnung nach Anspruch 1, dadurch gekennzeichnet, daß zwischen dem Schwellwertschalter (113) und dem Spannungsteiler (110) ein Verzögerungsglied (114) geschaltet ist.

3. Schaltungsanordnung zur Erfassung eines Differenz- bzw. Fehlerstromes in einem aus wenigstens einem Phasenleiter und einem Neutralleiter gebildeten Netz, mit wenigstens einem Summenstromwandler, dessen Primärwicklung durch die Phasenleiter und den Neutralleiter gebildet ist und dessen Sekundärwicklung bei Auftreten eines Fehlerstromes ein Differenzstromsignal abgibt, mit einer netzversorgten Einrichtung zum Verarbeiten und Verstärken des Differenzstromsignales zur Erzeugung eines vom Differenzstromsignal abhängigen Ausgangssignals, insbesondere einem handelsüblichen integrierten Schaltkreis, mit einem Operationsverstärker, auf dessen Eingänge die Enden der Sekundärwicklung geschaltet sind und mit einem durch einen in Abhängigkeit vom Differenzstromsignal auf- bzw. entladbaren Kondensator setzbaren Speicher, der das Ausgangssignal erzeugt, mit einem durch das Ausgangssignal der Einrichtung angesteuerten steuerbaren Halbleiterventil und mit einem Auslöser zum Betätigen von das Netz abschaltenden Schaltkontakten, welcher Auslöser beim Durchsteuern des Halbleiterventils mittels des Setzens Ausgangssignales anspricht, und mit einer an wenigstens einem Phasenleiter und dem Neutralleiter angeschlossenen Gleichrichteranordnung zur Versorgung der Einrichtung, wobei zwischen der Gleichrichteranordnung und dem wenigstens einen Phasenleiter der Auslöser eingeschaltet ist, dadurch gekennzeichnet, daß parallel zu der Gleichrichteranordnung zwischen dem Auslöser und der Gleichrichteranordnung ein gasgefüllter Überspannungsableiter (15) geschaltet ist.

Fig.1

Fig.2

0226704

Fig.3

Fig.4

Fig.5

Fig. 5a

Fig. 5b

Fig. 6

Fig. 7

5/6

0226704

Fig. 8

Fig. 9

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | JP-A-60 121 915 (TOSHIBA)<br><br>* Figur 1 *<br><br>--- | 1,2 | H 02 H 3/33<br>H 02 H 3/20 |
| Y | US-A-4 197 567 (DIETZ et al.)<br><br>* Figur 4, Spalte 2, Zeile 42 - Spalte 3, Zeile 22 *<br><br>--- | 1,2 | |
| Y | DE-A-2 448 711 (VEB STARKSTROM-ANLAGENBAU)<br><br>* Figur 2; Seite 4, Zeile 6 - Seite 5, Zeile 3 *<br><br>--- | 1,2 | |
| X | US-A-3 769 548 (PARDUE)<br><br>* Spalte 4, Zeilen 3-13; Figur 1 *<br><br>--- | 3 | |
| A | DE-B-1 065 069 (CONDOR)<br><br>* Spalte 4, Zeilen 3-9; Figur 1 *<br><br>--- | 3 | RECHERCHIERTE SACHGEBIETE (Int. Cl.4)<br><br>H 02 H |
| A | US-A-3 512 045 (TIPTON et al.)<br><br>* Ansprüche 1,2; Figur 1 *<br><br>--- | 3 | |
| A,D | EP-A-0 054 958 (BBC)<br><br>------------ | | |

Der vorliegende Recherchenbericht wurde für alle Patentansprüche erstellt.

| Recherchenort | Abschlußdatum der Recherche | Prüfer |
|---|---|---|
| Den Haag | 08-04-1987 | KOLBE |

**Europäisches
Patentamt**

---

## GEBÜHRENPFLICHTIGE PATENTANSPRÜCHE

Die vorliegende europäische Patentanmeldung enthielt bei Ihrer Einreichung mehr als zehn Patentansprüche.

☐ Alle Anspruchsgebühren wurden innerhalb der vorgeschriebenen Frist entrichtet. Der vorliegende europäische Recherchenbericht wurde für alle Patentansprüche erstellt.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt für die Anspruchsgebühren entrichtet wurden,

nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

---

## X | MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung; sie enthält mehrere Erfindungen oder Gruppen von Erfindungen, nämlich:

1) Patentansprüche 1,2: Fehlerstromschalter mit
                        Schwellwertschalter

2) Patentanspruch 3: Fehlerstromschalter mit gasgefültem
                     Überspannungsableiter

☒ Alle weiteren Recherchengebühren wurden innerhalb der gesetzten Frist entrichtet. Der vorliegende europäische Recherchenbericht wurde für alle Patentansprüche erstellt.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind,

nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen,

nämlich Patentansprüche: